# FASCICULE DE BREVET EUROPEEN

(11) **EP 1 793 147 B1**
(45) Date de publication et mention de la délivrance du brevet: **19.08.2009**
(21) Numéro de dépôt: 06301083.9
(22) Date de dépôt: 24.10.2006
(51) Int. Cl.: F16K 1/30, F16K 1/36, F16K 1/42, F16K 25/00, B60R 21/26, A62B 9/02, F15B 1/08, F15B 1/027, F16K 17/38

(54) **Dispositif de stockage de fluide sous pression, masque et organe d'actionnement comprenant un tel dispositif**
Unter Druck stehender Flüssigkeitsspeicher, Maske und Betätigungsvorrichtung mit einem solchen Flüssigkeitsspeicher
Storage device for fluid under pressure, mask and actuator comprising such a device

(30) Priorité: 30.11.2005 FR 0553633
(43) Date de publication de la demande: 06.06.2007
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: Rigoletti, René, 38580 La Chapelle du Bard (FR); Zapata, Richard, 38180 Seyssins (FR)
(74) Mandataire: De Cuenca, Emmanuel Jaime

(56) Documents cités:
- EP-A- 1 128 109
- EP-A- 1 223 085
- GB-A- 2 317 216
- US-A- 6 007 049
- US-A1- 2004 089 302

## Description

La présente invention concerne un dispositif de stockage de fluide sous pression ainsi qu'un masque et un organe d'actionnement comprenant un tel dispositif.

L'invention concerne plus particulièrement un dispositif de stockage de fluide sous pression, notamment du gaz sous pression, comprenant un corps définissant un volume de stockage, un premier orifice notamment pour le remplissage dudit corps, des moyens d'obturation du premier orifice comportant un siège et un obturateur apte à être déplacé relativement au siège entre une position d'ouverture et une position de fermeture du premier orifice.

Les réserves de gaz sous pression connues embarquées dans des applications aéronautiques ou automobiles doivent pouvoir stocker du gaz sous pression pendant de longues périodes et sans risque d'explosion, notamment en cas d'incendie.

De telles réserves de fluides sous pression sont utilisées notamment dans des aéronefs pour stocker un mélange gazeux enrichi en oxygène. Cette réserve d'oxygène est couplée à un masque ou une cagoule pour ravitailler en urgence des utilisateurs en cas de dépressurisation de la cabine de l'aéronef. Ces réserves doivent pouvoir se vider de façon contrôlée en cas d'incendie notamment, pour éviter tout risque d'explosion.

L'étanchéité des réserves connues est assurée en général via des joints en élastomère. De plus, les dispositifs connus comportent des clapets de surpression permettant de libérer leur contenu lorsque la pression en leur sein devient excessive.

Ces solutions, voir aussi GB 2 317 216, connues ne sont pas satisfaisantes car elles sont complexes, coûteuses et nécessitent une maintenance et des contrôles périodiques.

Un but de la présente invention est de pallier tout ou partie des inconvénients de l'art antérieur relevés ci-dessus.

A cette fin, le dispositif de stockage de fluide sous pression selon l'invention, par ailleurs conforme à la définition générique qu'en donne le préambule ci-dessus, est essentiellement caractérisé en ce que les portions respectives du siège et l'obturateur destinées à coopérer ont des formes conjuguées et des duretés différentes déterminées pour permettre, en position de fermeture de l'obturateur, une fermeture étanche et à usage unique du premier orifice par déformation plastique d'au moins une des portions.

C'est-à-dire que les portions respectives du siège et de l'obturateur coopèrent par déformation plastique pour former une fermeture à usage unique ou «définitive », formant ainsi une forme scellée. La sortie de gaz est prévue à un endroit différent de la zone de coopération plastique entre le siège et l'obturateur

Par ailleurs, l'invention peut comporter l'une ou plusieurs des caractéristiques suivantes :
- les portions respectives du siège et l'obturateur ont une différence de dureté de l'ordre de 125 Vickers,
- les portions respectives du siège et l'obturateur sont constituées de métaux ou d'alliage de métaux respectifs du type acier,
- les formes conjuguées comportent une arête vive formée sur le siège, ou sur l'obturateur, et une surface de réception sensiblement régulière, formée sur l'obturateur, ou respectivement sur le siège,
- le siège est délimité par une arête circulaire délimitant le premier orifice et en ce que l'obturateur a une forme générale tronconique apte à permettre la fermeture du premier orifice par serrage du tronc de cône contre l'arête avec pénétration partielle du tronc de cône au travers du premier orifice,
- le dispositif comporte des moyens formant une soupape de sécurité permettant la décharge du fluide vers l'extérieur du corps lorsque le dispositif est soumis à une température limite déterminée,
- les moyens forment une soupape de sécurité comportent un canal de délestage formé au travers de l'obturateur et apte à mettre en communication le volume de stockage avec l'extérieur du corps, ledit canal de délestage étant obturé par un organe fusible à la température limite déterminée, tel qu'un dépôt d'alliage métallique,
- le dispositif comporte un conduit de remplissage raccordé d'une part au premier orifice et, d'autre part, à une entrée communiquant avec l'extérieur du dispositif,
- l'obturateur est apte à être déplacé relativement au siège par vissage dans le dispositif,
- le dispositif comporte un second orifice de sortie, pour permettre notamment la délivrance de fluide à partir du volume de stockage vers un consommateur extérieur,
- le canal de délestage est apte à mettre en communication le volume de stockage avec l'extérieur du corps via une ouverture distincte de l'entrée du canal de remplissage,
- le dispositif comporte des moyens d'étanchéité tels qu'un joint torique, interposé entre l'obturateur et le corps,
- les moyens d'étanchéité sont disposés dans le canal de délestage et en dehors du conduit de remplissage,
- le conduit de remplissage est formé par une dérivation du canal de délestage de sorte que le conduit de remplissage et le canal de délestage ont une portion commune et transitant chacune via le premier orifice,
- le dispositif comporte des moyens formant un scellé entre l'obturateur et le corps du dispositif, tels qu'un cordon de colle ou de résine, pour garantir l'intégrité de la position de l'obturateur relativement au siège.

Un autre but de l'invention est de proposer un masque destiné à fournir un mélange gazeux enrichi en oxygène comportant un dispositif de stockage de fluide sous pression conforme à l'une quelconque des caractéristiques précédentes.

Selon une autre particularité, le masque comprend une enveloppe destinée à être disposée sur la tête d'un utilisateur ; caractérisé en ce que le dispositif de stockage de fluide sous pression comporte un second orifice de sortie calibré débouchant dans l'enveloppe, le second orifice étant obturé par un bouchon amovible ou à rupture aménagée.

Un autre but de l'invention est de proposer un organe d'actionnement d'une pièce mécanique, notamment d'une porte ou d'un air-bag, comprenant un dispositif de stockage de fluide sous pression destiné à contenir du gaz sous pression, un système de libération du gaz sous pression, par exemple pyrotechnique, pour permettre la génération d'un effort d'actionnement.

Selon l'invention, le dispositif de stockage de fluide sous pression de l'organe d'actionnement est conforme à l'une quelconque des caractéristiques ci-dessus.

Selon une autre particularité, l'organe d'actionnement d'une pièce mécanique, notamment d'une porte ou d'un air-bag, comprend un dispositif de stockage de fluide sous pression destiné à contenir du gaz sous pression, un système de libération du gaz sous pression, par exemple pyrotechnique, pour permettre la génération d'un effort d'actionnement, caractérisé en ce que le dispositif de stockage de fluide sous pression est conforme à l'une quelconque des caractéristiques précédentes.

D'autres particularités et avantages apparaîtront à la lecture de la description ci-après, faite en référence aux figures dans lesquelles :
- la figure 1 représente une vue en coupe d'un exemple de réalisation d'un dispositif de stockage de fluide sous pression selon l'invention,
- la figure 2 représente une vue en perspective d'un exemple d'une cagoule comportant un dispositif de stockage de fluide sous pression selon l'invention.

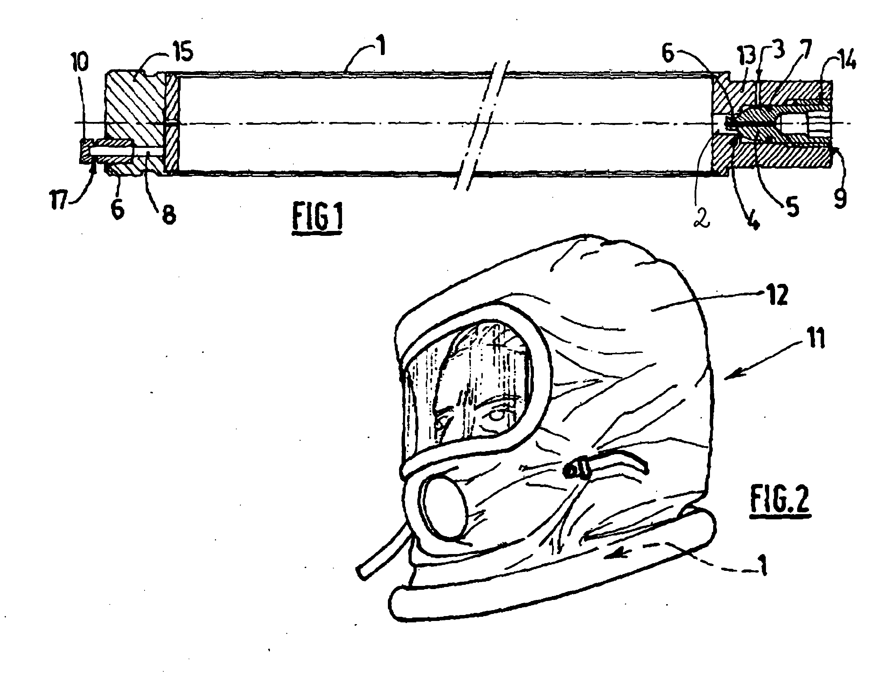

Le dispositif de stockage de fluide sous pression représenté à la figure 1 comprend un corps 1 définissant un volume de stockage. Le corps a par exemple la forme d'un tube en forme d'anneau sensiblement circulaire. Bien entendu, toute autre forme peut être envisagée.

Une première extrémité du corps 1 est refermée par une tête 13 de remplissage et de délestage, par exemple soudée dans le corps 1. La tête 13 de remplissage et de délestage est constituée par exemple d'un alliage métallique tel que de l'acier.

La tête 13 comporte un premier orifice 2 prévu notamment pour permettre le remplissage dudit corps 1 avec, par exemple, un gaz ou un mélange gazeux sous pression. La tête 13 définit en son sein un siège 4 autour du premier orifice 2, le siège 4 étant destiné à coopérer avec un obturateur mobile 5. Plus précisément, le siège 4 est délimité par une arête vive circulaire.

Le premier orifice 2 débouche à l'extérieur du dispositif via un alésage dans lequel est disposé un obturateur 5 mobile relativement à la tête 13. L'obturateur 5 a par exemple une forme générale tronconique et peut être déplacé relativement au siège 4 entre une position d'ouverture et une position de fermeture du premier orifice 2.

Avantageusement, les portions respectives du siège 4 et l'obturateur 5 destinées à coopérer ont des formes conjuguées et des duretés différentes déterminées pour permettre, en position de fermeture de l'obturateur 5, une fermeture étanche du premier orifice 2 par déformation plastique d'au moins une des portions respectives.

De préférence, la différence de dureté entre le siège 4 et l'obturateur 5 est de l'ordre de 125 HV (Vickers). Par exemple, l'obturateur 5 a une dureté comprise entre 250 et 300 HV, tandis que le siège 4 a une dureté comprise entre 130 et 160 HV.

De préférence, le siège 4 et constitué de l'un des matériaux inoxydables tels le Z2CND17-13 tandis que l'obturateur 5 est constitué de l'un des matériaux cupro-nickel tels le CuNi14A12.

De préférence, la fermeture du premier orifice 2 par l'obturateur 5 est obtenue par serrage de sa portion en tronc de cône contre l'arête 4 avec pénétration partielle du tronc de cône au travers du premier orifice 2.

La dureté relativement élevée de l'obturateur 5 par rapport à celle de l'arête vive du siège 4 permet de sceller de façon étanche l'orifice 2. L'étanchéité est obtenue par écrasement de la portion conique de l'obturateur 5 sur l'arête 4 plus tendre du siège de l'orifice 2.

L'obturateur 5 est de préférence vissé dans le corps de la tête 13 (filetage 14 d'une partie de l'alésage). Des moyens 7 d'étanchéité tels qu'un joint torique peuvent être interposés entre l'obturateur 5 et l'alésage de la tête 13.

L'étanchéité de la fermeture de l'orifice 2 est obtenue par serrage de l'obturateur 5 avec une valeur de couple de serrage déterminée.

Selon une caractéristique avantageuse, le dispositif comporte une soupape de sécurité pour éviter l'explosion du dispositif de stockage. La soupape de sécurité comprend un canal de délestage formé au travers de l'obturateur 5 et apte à mettre en communication le volume de stockage avec l'extérieur du corps 1. Le canal de délestage est obturé par un organe 6 fusible à une température seuil déterminée. Par exemple, l'organe fusible est un dépôt 6 d'alliage métallique étain-plomb-argent de type « All State ».

Comme représenté, le dispositif peut comporter des moyens 9 formant un scellé entre l'obturateur 5 et la tête 13, tels qu'un cordon de colle ou de résine, pour garantir l'intégrité et l'inviolabilité de la position de l'obturateur 5 relativement au siège 4.

La tête 13 comporte un conduit de remplissage raccordé d'une part au premier orifice 2 et, d'autre part, à une entrée 3 communiquant avec l'extérieur du dispositif. De préférence, l'entrée 3 du conduit de remplissage est raccordée de façon transversale à l'alésage dans lequel est disposé l'obturateur 5.

De cette façon, le canal de délestage est apte à mettre en communication le volume de stockage avec l'extérieur du corps 1 via une ouverture distincte de l'entrée 3 du canal de remplissage.

De préférence, le conduit de remplissage est formé par une dérivation du canal de délestage, de sorte que le conduit de remplissage et le canal de délestage ont une portion commune et transitant via le premier orifice 2.

De plus, le joint torique d'étanchéité 7 entre l'obturateur et la tête de remplissage 13 est disposés dans l'alésage et en dehors du conduit de remplissage.

Dans cette configuration, le remplissage en fluide du dispositif peut être réalisé via l'ouverture 3 transversale tandis que l'obturateur 5 est disposé dans son alésage mais pas dans sa position de fermeture étanche du premier orifice 2. Lorsque le remplissage du gaz est terminé (typiquement une pression de l'ordre de 150 bar) un couple de serrage peut être appliqué à l'obturateur 5 pour réaliser la fermeture étanche de l'orifice 2.

La structure selon l'invention, tout en étant simple et peu coûteuse, permet de garantir une très grande qualité d'étanchéité entre l'obturateur 5 et son siège (typiquement avec un taux de fuite inférieur à 3.10⁻⁸).

La structure des moyens de délestage (canal et bouchon fusible 6) permet en outre d'assurer une grande fiabilité du délestage du contenu en cas d'élévation anormale de température (précision par exemple de 2°C par rapport à une température seuil).

Dans l'exemple représenté à la figure 1, une seconde extrémité du corps est refermée par une tête 15 de délivrance du fluide contenu dans le corps 1.

La tête 15 de délivrance du fluide comporte un second orifice 8 dit de sortie, pour permettre notamment la délivrance de fluide à partir du volume de stockage vers un consommateur extérieur.

Le second orifice 8 de sortie est refermé par un bouchon 10 constitué par exemple de laiton et fixé sur la tête 15 par exemple par une brasure 16 d'argent.

Le bouchon 10 comporte une zone 17 affaiblie destinée à être sectionnée manuellement par un utilisateur en vue de libérer le contenu du corps 1 via un orifice calibré.

Un tel dispositif de stockage de fluide peut être utilisé dans une cagoule 11 de sécurité telle que représentée à la figure 2. La cagoule 11 comporte une enveloppe 12 destinée à être disposée sur la tête d'un utilisateur; le second orifice 8 de sortie calibré débouchant dans l'enveloppe 12.

Dans cette forme de réalisation, le dispositif de stockage 1 est disposé à la base de l'enveloppe et a une forme circulaire pour permettre sa disposition autour du cou d'un utilisateur.

Bien entendu, le dispositif de stockage n'est pas limité à l'application ci-dessus. Ainsi, le dispositif de stockage peut être utilisé comme réserve de gaz vecteur d'énergie mécanique pour un organe d'actionnement d'une pièce mécanique, par exemple pour l'actionnement d'une porte, d'un capot de véhicule, pour le remplissage d'un air-bag ou analogue.

## Revendications

1. Dispositif de stockage de fluide sous pression, notamment du gaz sous pression, comprenant un corps (1) définissant un volume de stockage, un premier orifice (2) notamment pour le remplissage dudit corps (1), des moyens d'obturation du premier orifice (2) comportant un siège (4) et un obturateur (5) apte à être déplacé relativement au siège (4) entre une position d'ouverture et une position de fermeture du premier orifice (2), **caractérisé en ce que** les portions respectives du siège (4) et l'obturateur (5) destinées à coopérer ont des formes conjuguées et des duretés différentes déterminées pour permettre, en position de fermeture de l'obturateur (5), une fermeture étanche et à usage unique du premier orifice (2) par déformation plastique d'au moins une des portions.

2. Dispositif selon la revendication 1, **caractérisé en ce que** les portions respectives du siège (4) et l'obturateur (5) ont une différence de dureté de l'ordre de 125 Vickers.

3. Dispositif selon la revendication 1 ou 2, **caractérisé en ce que** l'obturateur 5 a une dureté comprise entre 250 et 300 HV (Vickers), tandis que le siège 4 a une dureté comprise entre 130 et 160 HV (Vickers).

4. Dispositif selon l'une quelconque des revendications 1 à 3, **caractérisé en ce que** le siège 4 et constitué de l'un des matériaux inoxydables tels le Z2CND17-13 tandis que l'obturateur 5 est constitué de l'un des matériaux cupro-nickel tels le CuNi14A12.

5. Dispositif selon l'une quelconque des revendications 1 à 4, **caractérisé en ce que** les portions respectives du siège (4) et l'obturateur (5) sont constituées de métaux ou d'alliage de métaux respectifs du type acier.

6. Dispositif selon l'une quelconque des revendications 1 à 5, **caractérisé en ce que** les formes conjuguées comportent une arête vive formée sur le siège (4), ou sur l'obturateur (5), et une surface de réception sensiblement régulière, formée sur l'obturateur (5), ou respectivement sur le siège (4).

7. Dispositif selon l'une quelconque des revendications 1 à 6, **caractérisé en ce que** le siège (4) est délimité par une arête circulaire délimitant le premier orifice (2) et **en ce que** l'obturateur (5) a une forme générale tronconique apte à permettre la fermeture du premier orifice (2) par serrage du tronc de cône contre l'arête avec pénétration partielle du tronc de cône au travers du premier orifice (2).

8. Dispositif selon l'une quelconque des revendications précédentes, **caractérisé en ce qu'**il comporte des moyens (6) formant une soupape de sécurité permettant la décharge du fluide vers l'extérieur du corps (1) lorsque le dispositif est soumis à une température limite déterminée.

9. Dispositif selon la revendication 8, **caractérisé en ce que** les moyens (6) formant une soupape de sécurité comportent un canal de délestage formé au travers de l'obturateur (5) et apte à mettre en communication le volume de stockage avec l'extérieur du corps (1), ledit canal de délestage étant obturé par un organe (6) fusible à la température limite déterminée, tel qu'un dépôt d'alliage métallique.

10. Dispositif selon la revendication 9 **caractérisé en ce que** le canal de délestage est apte à mettre en communication le volume de stockage avec l'extérieur du corps via une ouverture distincte de l'entrée du canal de remplissage.

11. Dispositif selon l'une quelconque des revendications 1 à 10 **caractérisé en ce que** le dispositif comporte des moyens d'étanchéité tels qu'un joint torique, interposé entre l'obturateur et le corps.

12. Dispositif selon l'une quelconque des revendications précédentes, **caractérisé en ce qu'**il comporte un conduit de remplissage raccordé d'une part au premier orifice (2) et, d'autre part, à une entrée (3) communiquant avec l'extérieur du dispositif.

13. Dispositif selon les revendications 11 et 12 **caractérisé en ce que** les moyens d'étanchéité sont disposés dans le canal de délestage et en dehors du conduit de remplissage.

14. Dispositif selon l'une des revendications 12 ou 13 **caractérisé en ce que** le conduit de remplissage est formé par une dérivation du canal de délestage de sorte que le conduit de remplissage et le canal de délestage ont une portion commune et transitant chacune via le premier orifice.

15. Dispositif selon l'une quelconque des revendications précédentes, **caractérisé en ce que** l'obturateur (5) est apte à être déplacé relativement au siège (4) par vissage dans le dispositif.

16. Dispositif selon l'une quelconque des revendications précédentes, **caractérisé en ce qu'**il comporte un second orifice (8) de sortie, pour permettre notamment la délivrance de fluide à partir du volume de stockage vers un consommateur extérieur.

17. Dispositif selon l'une des revendications 1 à 16 **caractérisé en ce que** le dispositif comporte des moyens formant un scellé entre l'obturateur et le corps, tels qu'un cordon de colle ou de résine, pour garantir l'intégrité de la position de l'obturateur relativement au siège.

18. Masque destiné à fournir un mélange gazeux enrichi en oxygène, **caractérisé en ce qu'**il comporte un dispositif de stockage de fluide sous pression conforme à l'une quelconque des revendications précédentes.

19. Masque selon la revendication 18, comprenant une enveloppe (12) destinée à être disposée sur la tête d'un utilisateur ; **caractérisé en ce que** le dispositif de stockage de fluide sous pression comporte un second orifice (8) de sortie calibré débouchant dans l'enveloppe (12), le second orifice (8) étant obturé par un bouchon (10) amovible ou à rupture aménagée.

20. Organe d'actionnement d'une pièce mécanique, notamment d'une porte ou d'un air-bag, comprenant un dispositif de stockage de fluide sous pression destiné à contenir du gaz sous pression, un système de libération du gaz sous pression, par exemple pyrotechnique, pour permettre la génération d'un effort d'actionnement, **caractérisé en ce que** le dispositif de stockage de fluide sous pression est conforme à l'une quelconque des revendications 1 à 17.

## Claims

1. Device for storing fluid under pressure, particularly gas under pressure, comprising a body (1) defining a storage volume, a first orifice (2) particularly for filling the said body (1), means of shutting off the first orifice (2) comprising a seat (4) and a shut-off member (5) able to be moved relative to the seat (4) between a position in which the first orifice (2) is open and a position in which that orifice is closed, **characterized in that** the respective portions of the seat (4) and of the shut-off member (5) that are intended to collaborate with one another have mating shapes of different hardnesses designed to allow, when the shut-off member (5) is in the closed position, the first orifice (2) to be shut off in a gas-tight manner and single use of the first orifice (2) by plastic deformation of at least one of the portions.

2. Device according to Claim 1, **characterized in that** the respective portions of the seat (4) and of the shut-off member (5) have a difference in hardness of the order of 125 Vickers.

3. Device according to Claim 1 or 2, **characterized in that** the shut-off member (5) has a hardness of between 250 and 300 HV (Vickers scale), while the seat (4) has a hardness of between 130 and 160 HV (Vickers scale).

4. Device according to any one of Claims 1 to 3, **characterized in that** the seat (4) is made of one of the inoxidizable materials such as Z2CND17-13 whereas the shut-off member (5) is made of one of the cupro-nickel materials such as CuNi14A12.

5. Device according to any one of Claims 1 to 4, **characterized in that** the respective portions of the seat (4) and the shut-off member (5) are made of respective metals or metal alloys of the steel type.

6. Device according to any one of Claims 1 to 5, **characterized in that** the mating shapes comprise a sharp edge formed on the seat (4) or on the shut-off member (5), and a substantially uniform accommodating surface formed on the shut-off member (5) or the seat (4), respectively.

7. Device according to any one of Claims 1 to 6, **characterized in that** the seat (4) is delimited by a circular sharp edge delimiting the first orifice (2) and **in that** the shut-off member (5) has a frustoconical overall shape able to allow the first orifice (2) to be shut off by firmly pressing the cone frustum against the sharp edge with partial penetration of the cone frustum through the first orifice (2).

8. Device according to any one of the preceding claims, **characterized in that** it comprises means (6) forming a safety valve allowing fluid to be discharged to the outside of the body (1) when the device is subjected to a set limit temperature.

9. Device according to Claim 8, **characterized in that** the means (6) forming a safety valve comprise a relief passage formed through the shut-off member (5) and able to place the storage volume in communication with the outside of the body (1), the said relief passage being shut off by a member (6) that melts at the determined limit temperature, such as a blob of metal alloy.

10. Device according to Claim 9, **characterized in that** the relief passage is able to place the storage volume in communication with the outside of the body via an opening separate from the inlet of the filling passage.

11. Device according to any one of Claims 1 to 10, **characterized in that** the device comprises sealing means such as an O-ring seal, inserted between the shut-off member and the body.

12. Device according to any one of the preceding claims, **characterized in that** it comprises a filling duct connected, on the one hand, to the first orifice (2) and, on the other hand, to an inlet (3) communicating with the outside of the device.

13. Device according to Claims 11 and 12,
**characterized in that** the sealing means are positioned in the relief passage and outside of the filling duct.

14. Device according to one of Claims 12 and 13,
**characterized in that** the filling duct is formed by a tapping of the relief passage so that the filling duct and the relief passage have a portion in common and each pass through the first orifice.

15. Device according to any one of the preceding claims, **characterized in that** the shut-off member (5) is able to be moved relative to the seat (4) by screwing into the device.

16. Device according to any one of the preceding claims, **characterized in that** it comprises a second, outlet, orifice (8) in order in particular to allow fluid to be delivered from the storage volume to an external consumer.

17. Device according to one of Claims 1 to 16,
**characterized in that** the device comprises means that form a seal of integrity between the shut-off member and the body, such as a bead of adhesive or of resin, to guarantee the integrity of the position of the shut-off member relative to the seat.

18. Mask intended to supply an oxygen-enriched gaseous mixture, **characterized in that** it comprises a device for storing fluid under pressure according to any one of the preceding claims.

19. Mask according to Claim 18, comprising an envelope (12) intended to be placed over the head of a user; **characterized in that** the device for storing fluid under pressure comprises a calibrated, second, outlet orifice (8) opening into the envelope (12), the second orifice (8) being shut off by a removable or breakable plug (10).

20. Component for actuating a mechanical device, particularly a door or an airbag, comprising a device for storing fluid under pressure, intended to contain gas under pressure, a system for releasing the gas under pressure, for example a pyrotechnic system, to allow the generation of an actuating force, **characterized in that** the device for storing fluid under pressure is one according to any one of Claims 1 to 17.

## Patentansprüche

1. Vorrichtung zur Speicherung von unter Druck stehendem Fluid, insbesondere von unter Druck stehendem Gas, mit einem Körper (1), der ein Speichervolumen definiert, einer ersten Öffnung (2), insbesondere zum Füllen des Körpers (1), und Mitteln zum Verschließen der ersten Öffnung (2), die einen Sitz (4) und einen Verschluss (5), der relativ zum Sitz (4) zwischen einer Öffnungsposition und einer Schließposition der ersten Öffnung (2) verschoben werden kann, aufweisen, **dadurch gekennzeichnet, dass** die jeweiligen Teile des Sitzes (4) und des Verschlusses (5), die zusammenwirken sollen, Gegen-Formen und verschiedene bestimmte Härten aufweisen, um in der Schließposition des Verschlusses (5) einen dichten Verschluss für den einmaligen Gebrauch der ersten Öffnung (2) durch plastische Verformung mindestens eines der Teile zu gestatten.

2. Vorrichtung nach Anspruch 1, **dadurch gekennzeichnet, dass** die jeweiligen Teile des Sitzes (4) und des Verschlusses (5) einen Härtenunterschied von ca. 125 HV aufweisen.

3. Vorrichtung nach Anspruch 1 oder 2, **dadurch gekennzeichnet, dass** der Verschluss (5) eine Härte zwischen 250 und 300 HV (Vickershärte) aufweist, während der Sitz (4) eine Härte zwischen 130 und 160 HV (Vickershärte) aufweist.

4. Vorrichtung nach einem der Ansprüche 1 bis 3, **dadurch gekennzeichnet, dass** der Sitz (4) aus einem rostfreien Material, wie zum Beispiel Z2CND17-13, besteht, während der Verschluss (5) aus einem der Kupfer-Nickel-Materialien, wie zum Beispiel CuNi14A12, besteht.

5. Vorrichtung nach einem der Ansprüche 1 bis 4, **dadurch gekennzeichnet, dass** die jeweiligen Teile des Sitzes (4) und des Verschlusses (5) aus Stahl-Metallen bzw. -Metalllegierungen bestehen.

6. Vorrichtung nach einem der Ansprüche 1 bis 5, **dadurch gekennzeichnet, dass** die Gegen-Formen eine scharfe Kante, die an dem Sitz (4) oder an dem Verschluss (5) ausgebildet ist, und eine im Wesentlichen gleichmäßige Aufnahmefläche, die an dem Verschluss (5) bzw. an dem Sitz (4) ausgebildet ist, aufweisen.

7. Vorrichtung nach einem der Ansprüche 1 bis 6, **dadurch gekennzeichnet, dass** der Sitz (4) durch eine kreisförmige Kante begrenzt wird, die die erste Öffnung (2) begrenzt, und dass der Verschluss (5) eine allgemein kegelstumpfförmige Gestalt aufweist, die das Schließen der ersten Öffnung (2) durch Klemmen des Kegelstumpfes gegen die Kante unter teilweisem Eindringen in den Kegelstumpf durch die erste Öffnung (2) gestatten kann.

8. Vorrichtung nach einem der vorhergehenden Ansprüche, **dadurch gekennzeichnet, dass** sie Mittel (6) aufweist, die ein Sicherheitsventil bilden, das das Abführen des Fluids aus dem Körper (1) heraus, wenn die Vorrichtung einer bestimmten Grenztemperatur ausgesetzt ist, gestattet.

9. Vorrichtung nach Anspruch 8, **dadurch gekennzeichnet, dass** die ein Sicherheitsventil bildenden Mittel (6) einen Entlastungskanal aufweisen, der durch den Verschluss (5) ausgebildet ist und das Speichervolumen mit dem Äußeren des Körpers (1) verbinden kann, wobei der Entlastungskanal durch ein bei der bestimmten Grenztemperatur schmelzbares Glied (6), wie zum Beispiel eine Metalllegierungsablagerung, verschlossen ist.

10. Vorrichtung nach Anspruch 9, **dadurch gekennzeichnet, dass** der Entlastungskanal das Speichervolumen über einen von dem Einlass des Füllkanals verschiedenen Durchtritt mit dem Äußeren des Körpers verbinden kann.

11. Vorrichtung nach den Ansprüchen 1 bis 10, **dadurch gekennzeichnet, dass** die Vorrichtung Dichtungsmittel, wie zum Beispiel einen O-Ring, der zwischen dem Verschluss und dem Körper angeordnet ist, aufweist.

12. Vorrichtung nach einem der vorhergehenden Ansprüche, **dadurch gekennzeichnet, dass** sie eine Füllleitung aufweist, die einerseits an der ersten Öffnung (2) und andererseits an einem mit dem Äußeren der Vorrichtung verbundenen Einlass (3) angeschlossen ist.

13. Vorrichtung nach den Ansprüchen 11 und 12, **dadurch gekennzeichnet, dass** die Dichtungsmittel in dem Entlastungskanal und außerhalb der Füllleitung angeordnet sind.

14. Vorrichtung nach Anspruch 12 oder 13, **dadurch gekennzeichnet, dass** die Füllleitung durch eine Abzweigung des Entlastungskanals gebildet wird, so dass die Füllleitung und der Entlastungskanal einen gemeinsamen Teil aufweisen und jeweils durch die erste Öffnung passieren.

15. Vorrichtung nach einem der vorhergehenden Ansprüche, **dadurch gekennzeichnet, dass** der Verschluss (5) durch Schrauben in die Vorrichtung relativ zum Sitz (4) bewegt werden kann.

16. Vorrichtung nach einem der vorhergehenden Ansprüche, **dadurch gekennzeichnet, dass** sie eine zweite Ausgangs-Öffnung (8) aufweist, um insbesondere die Zufuhr von Fluid aus dem Speichervolumen zu einem äußeren Verbraucher zu gestatten.

17. Vorrichtung nach einem der Ansprüche 1 bis 16, **dadurch gekennzeichnet, dass** die Vorrichtung eine Versiegelung zwischen dem Verschluss und dem Körper bildende Mittel aufweist, wie zum Beispiel einen Klebstoff- oder Harzstrang, um die Integrität der Position des Verschlusses bezüglich des Sitzes zu gewährleisten.

18. Maske zur Zuführung eines mit Sauerstoff angereicherten Gasgemisches, **dadurch gekennzeichnet, dass** sie eine Vorrichtung zur Speicherung von unter Druck stehendem Fluid nach einem der vorhergehenden Ansprüche aufweist.

19. Maske nach Anspruch 18, die eine Umhüllung (12) aufweist, die auf dem Kopf eines Benutzers angeordnet werden soll; **dadurch gekennzeichnet, dass** die Vorrichtung zur Speicherung von unter Druck stehendem Fluid eine zweite, kalibrierte Ausgangs-Öffnung (8) aufweist, die in der Umhüllung (12) mündet, wobei die zweite Öffnung (8) durch einen entfernbaren oder eine Sollbruchstelle aufweisenden Stopfen (10) verschlossen ist.

20. Glied zur Betätigung eines mechanischen Teils, insbesondere einer Tür oder eines Airbags, mit einer Vorrichtung zur Speicherung von unter Druck stehendem Fluid, die unter Druck stehendes Gas enthalten soll, einem System zur Abgabe des unter Druck stehenden Gases, zum Beispiel ein pyrotechnisches System, um die Erzeugung einer Betätigungskraft zu gestatten, **dadurch gekennzeichnet, dass** die Vorrichtung zur Speicherung von unter Druck stehendem Gas einem der Ansprüche 1 bis 17 entspricht.
